(19)

**Europäisches Patentamt**

**European Patent Office**

**Office européen des brevets**

(11) **EP 3 506 531 A1**

(12) **EUROPEAN PATENT APPLICATION**

(43) Date of publication:
**03.07.2019 Bulletin 2019/27**

(51) Int Cl.:
**H04B 10/2507** *(2013.01)*     **H04B 10/40** *(2013.01)*
**H04B 10/50** *(2013.01)*     **H04B 10/60** *(2013.01)*

(21) Application number: **17210789.8**

(22) Date of filing: **28.12.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(71) Applicant: **Xieon Networks S.à r.l.**
**2633 Senningerberg (LU)**

(72) Inventors:
• **Calabrò, Stefano**
  **2633 Senningerberg (LU)**
• **Rapp, Lutz**
  **2633 Senningerberg (LU)**
• **Spinnler, Bernhard**
  **2633 Senningerberg (LU)**

(74) Representative: **Kretschmann, Dennis**
**Boehmert & Boehmert**
**Anwaltspartnerschaft mbB**
**Pettenkoferstrasse 22**
**80336 München (DE)**

(54)     **A SYSTEM AND METHOD FOR DETERMINING SKEW**

(57)     A system for determining skew comprises an optical transmitter unit adapted to generate an optical output signal with a first plurality of signal components and adapted to feed the optical output signal into an optical output path; an optical receiver unit adapted to receive an optical input signal with a second plurality of signal components from an optical input path; and an optical loopback path adapted to connect the optical output path to the optical input path. The optical loopback path is adapted to couple the first plurality of signal components of the optical output signal at least partly with the second plurality of signal components of the optical input signal. The system further comprises an analysis unit adapted to determine, from the coupled optical input signal, both a first skew pertaining to the optical transmitter unit and a second skew pertaining to the optical receiver unit.

Fig. 1

**Description**

Technical Field

The disclosure relates to signal transmission over optical networks, and in particular to techniques for determining skew, such as the skew of a combined transmitter/receiver assembly.

Background

The main drivers for the evolution of optical transmission systems have constantly been the need to increase the capacity of the telecommunication infrastructure and, at the same time, the urge to reduce the cost per signal transmission bit. In terms of optical transponder technology, these trends currently translate into the adoption of higher-order modulation formats with high-spectral efficiency, the increase of the signaling rate, and the replacement of traditional discrete optical components by integrated components.

Modern transponders make use of phase modulation (for example, binary phase-shift keying (BPSK) or quadrature phase-shift keying (QPSK)), or a combination of phase and amplitude modulation (for example, quadrature amplitude modulation (QAM)). Commonly, the resulting optical signals are not described by their amplitude and their phase, but rather by two orthogonal components, namely the in-phase component and the quadrature component. However, both representations are equivalent, and the representation in one system of coordinates can be transferred into a representation in the other system of coordinates. Additionally, two orthogonal polarization components of the light are often used to convey two independent QAM (or phase-modulated) signals or, alternatively, the two-dimensional projections of the four-dimensional signal. In summary, the optical transmission signals may be represented as signals with four components, or four independent dimensions: two polarization components each having an in-phase component and a quadrature component.

In order to successfully transmit these signals over a communication channel, the signal components need to be emitted by the optical transmitter unit at the same time, and there must be a similar alignment at the optical receiver unit. For example, if a pulse with four signal components is transmitted, the in-phase and quadrature components of each polarization need to arrive within fractions of picoseconds in order for the signal to be recoverable. The amount of time difference or differential group delay between the in-phase and quadrature components of the signal is generally known as skew. Skew may be due to imperfections both at the transmitter side and at the receiver side of an optical communication channel, and hence one distinguishes between transmitter skew and receiver skew. Skew is a practically very relevant impediment to high-fidelity data transmission over optical networks, in particular at higher modulation formats.

The combined use of high signaling rates, high-order modulation formats and integrated photonics makes it a serious challenge to minimize skew and achieve the required transmission quality. In conjunction with the trend towards integrated photonic solutions, the situation becomes even worse due to the fact that integrated optical devices have not yet achieved the performance of their discrete counterparts. For instance, the next generation of optical transponders is expected to support 64-point dual polarization quadrature amplitude modulation (64 QAM) at roughly 64 Gigasymbols per second, and employ integrated transmitters and receivers realized, e.g. in silicon photonics technology. Therefore, skew is anticipated to have a critical impact on the transmission quality.

Device manufacturers have constantly tried to limit the imperfections of the electronic and photonic components of optical transmitters and optical receivers. This is certainly an effective aspiration, but the approach is subject to a price/quality trade-off and can result in an unnecessarily expensive electrical and optical components.

Static digital pre-distortion based on factory calibration has been proposed by A. Napoli et al., "Novel DAC Digital Pre-Emphasis Algorithm for Next-Generation Flexible Optical Transponders", published in the Proceedings of the 2015 Optical Fiber Communication Conference (OFC 2015), Los Angeles, March 22 - March 26, 2015. Static digital pre-distortion can mitigate transmitter skew. However, calibration is time-consuming and thus impacts heavily the production costs. Moreover, calibration is unsuitable for systems assembled during deployment using pluggable components.

In their research paper "Low-Cost Transmitter Self-Calibration of Time Delay and Frequency Response for High Band-Rate QAM transceivers", Proceedings of the 2017 Optical Fiber Communication Conference (OFC 2017), Los Angeles, March 19 - March 23, 2017, C.R. Fludger *et al.* describe a transmitter calibration method using swept frequency tones and a single feedback photodiode. However, this method requires the transmission of special signals for calibration purposes, and corresponding calibration measurements.

G. Khanna et al. in their paper "A Robust Adaptive Pre-Distortion Method for Optical Communication Transmitters", IEEE Photonics Technology Letters, volume 28, no. 7, pages 752 - 755 (April 2016) describe an adaptive pre-distortion based on an auxiliary coherent receiver. This solution avoids the need for factory calibration, but requires an expensive and relatively bulky receiver, which may impact the transponder cost and size.

US 2016/0301520 A1 discloses techniques for determining transmitter and receiver skew between pairs of lanes of an electrical interface of a network element. Transmitter and receiver interfaces are coupled by means of a plurality of loopbacks that can be electrical or optical. The skew values of the electrical signals are calculated from measurement results for several configurations. The delay introduced by the loopback is assumed to be known, and skew is determined from the position of edges of the pulses. These techniques are useful in case direct access to the electrical lanes is feasible, but can be challenging in integrated transmitter and receiver assemblies.

Another technique for distinguishing between transmitter skew and receiver skew is described in US 8,855,498 B2. These techniques are based on the perception that setting a skew compensator at the receiver to the sum of both transmitter and receiver skew contributions yields optimum performance if the signal waveform is only slightly distorted, whereas the optimum setting corresponds to the mere receiver skew if there are huge waveform distortions. It is hence proposed to induce strong waveform distortions by operating the system at large dispersion values, where dispersion includes chromatic dispersion, polarization mode dispersion, and differential group delay. The method proceeds in two steps: After sufficiently increasing dispersion, the receiver skew is optimized. In a subsequent step, the skew compensator at the transmit side is set such that the Q factor becomes maximum.

In view of these techniques and their associated shortcomings, what is needed is a reliable and cost-efficient system and method for determining skew, in particular for determining both transmitter skew and receiver skew of an optical transmitter/receiver assembly.

Overview

This objective is achieved with a system and method for determining skew according to independent claims 1 and 10, respectively. The dependent claims relate to preferred embodiments.

In a first aspect, the disclosure relates to a system for determining skew, comprising: an optical transmitter unit adapted to generate an optical output signal with a first plurality of signal components, and adapted to feed the optical output signal into an optical output path; an optical receiver unit adapted to receive an optical input signal with a second plurality of signal components from an optical input path; and an optical loopback path adapted to connect the optical output path to the optical input path. The optical loopback path is adapted to couple the first plurality of signal components of the optical output signal at least partly with the second plurality of signal components of the optical input signal. The system further comprises an analysis unit adapted to determine, based on the coupled optical input signal, both a first skew pertaining to the optical transmitter unit, and a second skew pertaining to the optical receiver unit.

In the context of the present disclosure, the term skew can denote a single skew value, or a set of skew values.

By providing an optical loopback path that allows controlled coupling or mixing of the first plurality of signal components pertaining to the optical transmitter unit with the second plurality of signal components pertaining to the optical receiver unit, the system according to the present disclosure allows to generate optical or electrical output signals from which both a first skew pertaining to the optical transmitter unit and a second skew pertaining to the optical receiver unit can be determined. In particular, the system according to the present disclosure may allow determining both the transmitter skew and the receiver skew without the need to change the optical configuration of the loopback path, or the connection of the loopback path. This provides for a quick, efficient and easy way to determine the transmitter skew and the receiver skew. The techniques are particularly advantageous for transmitter/receiver assemblies, and may be employed in a test phase or initialization phase of the transmitter/receiver assembly to determine both the transmitter skew and the receiver skew. These results may then be employed to compensate for the transmitter skew and the receiver skew, such as by means of adaptive digital pre-distortion and equalization. In this way, both the transmission quality and the receiving quality of the transmitter/receiver assembly can be significantly enhanced.

In the sense of the present disclosure the signal components may correspond to different dimensions or degrees-of-freedom of the optical output signal and/or the optical input signal.

In particular, the signal components may comprise polarization directions of the optical output signal and/or the optical input signal.

The signal components may, additionally or alternatively, comprise in-phase and quadrature components of the optical output signal and/or the optical input signal.

For instance, in some examples the optical output signal and/or the optical input signal may comprise four signal components, such as two polarization components each having an in-phase component and a quadrature component.

The optical loopback path may be adapted to mix the first plurality of signal components of the optical output signal at least partly with the second plurality of signal components of the optical input signal, in particular adapted to coherently mix the signal components.

According to an embodiment, the analysis unit is adapted to determine a plurality of delay components that comprise a sum of delays of signal components among the first plurality of signal components and delays of signal components among the second plurality of signal components.

For instance, each delay component may comprise or may be the sum of two summands, wherein the first summand may be or may comprise a delay of signal components pertaining to the transmitter unit, and the second summand may be or may comprise a delay of signal components pertaining to the receiver unit, or vice versa.

According to an example, the delay components comprise the sum of delays of in-phase components and/or quadrature components pertaining to the optical transmitter unit and the optical receiver unit, respectively.

The analysis unit may be adapted to determine the first skew and the second skew from the plurality of delay components.

Determining the first skew and the second skew from the plurality of delay components may comprise generating a plurality of test optical output signals and test optical input signals, such as by means of time modulation.

According to an example, the optical transmitter unit is adapted to modulate a first signal component among the first plurality of signal components over time by means of a first modulation function.

The optical receiver unit may be adapted to demodulate a second signal component among the second plurality of signal components over time, such as by means of a second modulation function.

In some examples, the second modulation function may correspond to the first modulation function, with an additional time delay.

In other examples, the second modulation function is uncorrelated with the first modulation function.

Determining the first skew and the second skew from the plurality of delay components may comprise correlating a modulated first signal component among the first plurality of signal components with a modulated second signal component among the second plurality of signal components.

According to an embodiment, the analysis unit may be adapted to determine the first skew and the second skew with a fixed coupling, i. e., without changing the coupling of the first plurality of signal components with the second plurality of signal components in the optical loopback path.

In particular, the analysis unit may be adapted to determine the first skew and the second skew without any intermediate disconnecting or connecting of signal components among the first plurality of signal components and/or the second plurality of signal components.

Given that the system according to the present invention may not require a switching in the optical loopback path, the transmitter skew and the receiver skew can be determined quickly and with minimum effort even in integrated transmitter/receiver assemblies.

Even though the system may not require a re-switching or re-grouping between the signal components, in some examples the optical loopback path may nevertheless be adapted to adjust the coupling of the first plurality of signal components with the second plurality of signal components, in particular to vary the coupling over time.

According to some examples, the optical loopback path may be adapted to couple some or all signal components among the first plurality of signal components with some or all signal components among the second plurality of signal components.

For instance, according to an embodiment, the optical loopback path may be adapted to couple a first signal component among the first plurality of signal components at least partly with the second signal component among the second plurality of signal components, the second signal component being different from the first signal component.

According to an example, different signal components may correspond to different sub-paths.

For instance, the optical output path may comprise a first plurality of output sub-paths corresponding to the first plurality of signal components, and the optical input path may comprise a second plurality of input sub-paths corresponding to the second plurality of signal components.

The optical loopback path may be adapted to couple a first sub-path corresponding to a first signal component among the first plurality of signal components at least partly with a second sub-path corresponding to a second signal component among the second plurality of signal components, the second signal component being different from the first signal component.

According to an embodiment, the optical loopback path may be adapted to couple a first signal component among the first plurality of signal components at least partly with a second signal component among the first plurality of signal components, the second signal component being different from the first signal component.

Moreover, the optical loopback path may be adapted to couple a first signal component among the second plurality of signal components at least partly with a second signal component among the second plurality of signal components, the second signal component being different from the first signal component.

According to an embodiment, the optical loopback path comprises a coupling unit adapted to couple or mix the first plurality of signal components of the optical output signal at least partly with the second plurality of signal components of the optical input signal, in particular with predetermined respective coupling constants between the respective first plurality of signal components and second plurality of signal components.

According to an example, the coupling unit comprises an interferometer, in particular a Mach-Zehnder interferometer.

According to an embodiment, the system is adapted to selectively connect or couple the optical loopback path to the optical output path and/or to the optical input path.

A selective or controlled coupling allows to activate the optical loopback path selectively for a test mode or configuration mode of the system. During normal operation of the optical transmitter unit and/or optical receiver unit, the optical loopback path may be selectively deactivated in order not to interfere with the signal transmission.

According to an embodiment, the system comprises a first optical coupler adapted to optically connect or couple the optical loopback path to the optical output path, and/or a second optical coupler adapted to optically connect or couple the optical loopback path to the optical input path.

An optical coupler, in the sense of the present disclosure, may be understood to denote any device or mechanism adapted to establish an optical connection between the optical loopback path and the optical output path, and/or between the optical loopback path and the optical input path.

In particular, the optical coupler may be adapted to selectively connect the optical loopback path to the optical output path and/or optical input path, respectively, and/or to selectively disconnect the optical loopback path from the optical output path and/or optical input path, respectively.

According to an example, the first optical coupler and/or the second optical coupler comprises an optical switch.

In other examples, the first optical coupler and/or the second optical coupler may establish a permanent connection between the optical loopback path and the optical output path, and/or between the optical loopback path and the optical input path. In these examples, the optical loopback path may additionally comprise an optical switch for a selective activation and/or deactivation of the optical loopback path.

According to an example, the first optical coupler and/or the second optical coupler comprises an interferometer, in particular a Mach-Zehnder interferometer.

According to an embodiment, the optical transmitter unit may be adapted to convert electrical input signals into the optical output signal.

According to an example, the optical transmitter unit comprises an optical modulator.

The optical transmitter unit may comprise an optical transmitter laser and/or an interferometer.

According to an embodiment, the optical receiver unit is adapted to convert the optical input signal into electrical output signals.

According to an embodiment, the optical receiver unit comprises an optical demodulator.

In an embodiment, the optical receiver unit comprises an optical receiver laser.

According to an embodiment, the optical transmitter unit and the optical receiver unit and the optical loopback path are integrated into a common integrated optical device, in particular integrated into a pluggable module.

According to an embodiment, the pluggable module is integrated into an optical card.

According to another embodiment, the common integrated optical device is integrated into an optical card.

This allows to provide an integrated device with self-testing capabilities to determine the skew pertaining to the optical transmitter unit and the skew pertaining to the optical receiver unit.

In an embodiment, the integrated optical device may also integrate the analysis unit.

In a second aspect, the disclosure relates to a method for determining skew, comprising: generating an optical output signal with a first plurality of signal components, and feeding the optical output signal into an optical output path; receiving an optical input signal with a second plurality of signal components from an optical input path; connecting the optical output path to the optical input path; coupling the first plurality of signal components of the optical output signal at least partly with the second plurality of signal components of the optical input signal; and determining, based on the coupled optical input signal, both a first skew pertaining to the generation of the optical output signal and/or the feeding of the optical output signal into the optical output path, and a second skew pertaining to the receiving of the optical input signal.

According to an embodiment, the method comprises selectively connecting or coupling an optical loopback path to the optical output path and/or to the optical input path.

According to an embodiment, the first plurality of signal components and the second plurality of signal components are directly coupled by means of an optical loopback path.

The direct coupling may be a coupling that directly connects, via the optical loopback path, an optical output port at which the optical output signal is provided to an optical input port to which the optical input signal is provided.

In particular, the direct coupling may be a coupling that does not involve or proceed via further optical transmitter units and/or further optical receiver units of an optical network.

According to an embodiment, determining the first skew and the second skew comprises determining a plurality of delay components that comprise a sum of delays of signal components among the first plurality of signal components, and delays of signal components among the second plurality of signal components.

The first skew and the second skew may be determined from the plurality of delay components.

According to an example, the method further comprises modulating a first signal component among the first plurality of signal components over time with a first modulation function.

Moreover, the method may comprise modulating a second signal component among the second plurality of signal components over time with a second modulation function.

According to an embodiment, the first skew and the second skew may be determined with a fixed coupling, i. e., without changing the coupling of the first plurality of signal components with the second plurality of signal components.

In particular, according to an embodiment, the first skew and the second skew are determined without any intermediate disconnecting or connecting of signal components.

According to an embodiment, the method comprises adjusting the coupling of the first plurality of signal components with the second plurality of signal components, in particular varying the coupling over time.

The disclosure further relates to a computer program or a computer program product comprising computer-readable instructions that are adapted to implement, when executed on a computing system, in particular a computing system communicatively connected to and adapted to control the system with some or all of the features described above, a method with some or all of the features described above.

Brief Description of the Figures

The particulars and advantages associated with the system and method for determining skew according to the present disclosure will be best apparent from a detailed description of exemplary embodiments with reference to the accompanying Figures, in which:

Fig. 1     is a schematic overview of a system for determining skew according to an embodiment;

Fig. 2     is a schematic illustration of a circuit diagram of a system for determining skew according to an embodiment;

Fig. 3     is a schematic illustration of a transmitter/receiver assembly with internal loopback path according to an embodiment;

Fig. 4     is a schematic illustration of a transmitter/receiver assembly with internal loopback path according to another embodiment;

Fig. 5     is a schematic illustration of a digital transmitter/receiver assembly incorporating a digital signal processing unit according to an embodiment;

Fig. 6     is a schematic illustration of a transmitter/receiver assembly that may be employed in a system for determining skew according to an embodiment;

Fig. 7     is a schematic illustration of an optical transmitter/receiver assembly that may be employed in a system for determining skew according to another embodiment;

Fig. 8     is a schematic illustration of modulated signals that may be used for determining skew in a system and method according to an embodiment; and

Fig. 9     is a schematic flow diagram illustrating a method for determining skew according to an embodiment.

Description of Embodiments

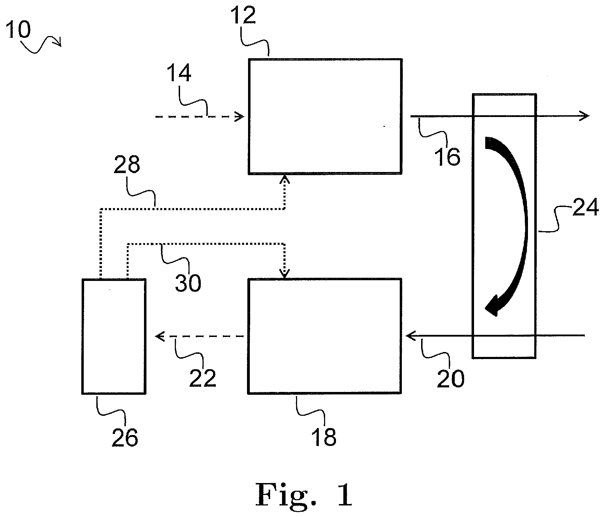

Fig. 1 is a conceptual schematic illustration of a system 10 for determining skew according to an example of the present disclosure. The system 10 comprises an optical transmitter unit 12 adapted to receive an electric input signal provided on an electric input path 14, and to convert the electric input signal into an optical output signal. The optical transmitter unit 12 may feed the optical output signal into an optical output path 16, such as a transmission channel of an optical network, in particular an optical fiber for optical data communication with a distant location in the optical network.

The optical output signal may be an optical signal for coherent detection comprising a first plurality of signal components. For instance, the optical transmitter unit 12 may be adapted to modulate the electric input signals provided via the electric input path 14 using polarization and quadrature to create the optical output signal for coherent detection fed into the optical output path 16.

In an example, the optical output signal comprises two orthogonal polarization components, wherein each polarization component comprises an in-phase component and a quadrature component. However, in other examples, the optical output signal may comprise a different number of signal components.

In some examples, the electric input signal provided via the electric input path 14 comprises a corresponding plurality of signal components, and the optical transmitter unit 12 may be adapted to amplify these electric component input signals individually so that they serve as driving signals for a dual-polarization optical modulator that up-converts the driving signals into the optical domain.

As can be further taken from Fig. 1, the system 10 additionally comprises an optical receiver unit 18 adapted to receive, from an optical input path 20, an optical input signal with a second plurality of signal components that may generally correspond to the first plurality of signal components, but may also differ from the first plurality of signal components in other examples. For instance, the optical input path 20 may be an optical transmission fiber adapted to receive signals from a remote location of the optical network.

The optical receiver unit 18 may be adapted to convert or demodulate the optical input signal received from the optical input path 20 into an electric output signal, and feed the electric output signal into an electric output path 22. The electric output signal may represent the information received by the optical receiver unit 18 from the optical input signal, and may be forwarded for additional data processing.

In some examples, the optical transmitter unit 12 and the optical receiver unit 18 may be stand-alone optical units. In other examples, the optical transmitter unit 12 and the optical receiver unit 18 may be integrated into a common transmitter/receiver assembly or transceiver unit, as will be explained in further detail below. The transmitter/receiver assembly may serve as an integrated unit for transmitting and receiving optical signals in an optical network. In a routine (non-testing) operation of the optical transmitter unit 12 and the optical receiver unit 18, the optical output signal and the optical input signal may propagate in respective output and input optical channels that are not directly coupled.

However, as can be further taken from Fig. 1, the system 10 additionally comprises an optical loopback path 24, which is adapted to establish a direct optical path between the optical output path 16 and the optical input path 20. The optical loopback path 24 may be adapted to selectively and controllably couple to the optical output path 16 and the optical input path 20, and may be activated during an analysis phase or test phase of the system 10 for determining skew associated with the optical transmitter unit 12 and the optical receiver unit 18. In particular, the optical loopback path 24 may be adapted to selectively and controllably couple the first plurality of signal components of the optical output signal propagating in the optical output path 16 at least partly with the second plurality of signal components of the optical input signal propagating in the optical input path 20. The optical signal that results from this mixing or coupling via the optical loopback path 24, when received at the optical receiver unit 18, may comprise skew contributions pertaining both to the optical transmitter unit 12 and the optical receiver unit 18, and may serve as a basis for determining these skew contributions by means of measurement and/or analysis.

As can be taken from Fig. 1, the system 10 further comprises an analysis unit 26 that is coupled to the electric output path 22 and is adapted to determine, from the received optical input signal, both a first skew pertaining to the optical transmitter unit 12 and a second skew pertaining to the optical receiver unit 18. Optionally, the analysis unit 26 is adapted to determine the first skew pertaining to the optical transmitter unit 12 and the second skew pertaining to the optical receiver unit 18 from both the received optical input signal and the receiver input signal 14. The analysis unit 26 may hence additionally be connected to the electric input path 14.

In the example of Fig. 1, the analysis unit 26 may analyze the electric output signals that are generated by the optical receiver unit 18 in response to receiving the coupled optical input signal and are fed to the analysis unit 26 via the electric output path 22. The analysis unit 26 may also analyze the electrical signals 14. In other examples, the analysis unit 26 may be integrated into the optical receiver unit 18 or the optical transmitter unit 12, and/or may be adapted to analyze the coupled optical input signal.

The transmitter skew and receiver skew determined by the analysis unit 26 may be employed to change respective configurations or settings of the optical transmitter unit 12 and/or optical receiver unit 18 so to correct for or compensate for the respective skew components. For instance, the analysis unit 26 may provide respective control signals to the optical transmitter unit 12 via a transmitter unit control path 28, and may provide control signals to the optical receiver unit 18 via a receiver unit control path 30. The control signals provided by the analysis unit 26 in response to the determined transmitter skew and/or receiver skew may be employed for adaptive digital pre-distortion.

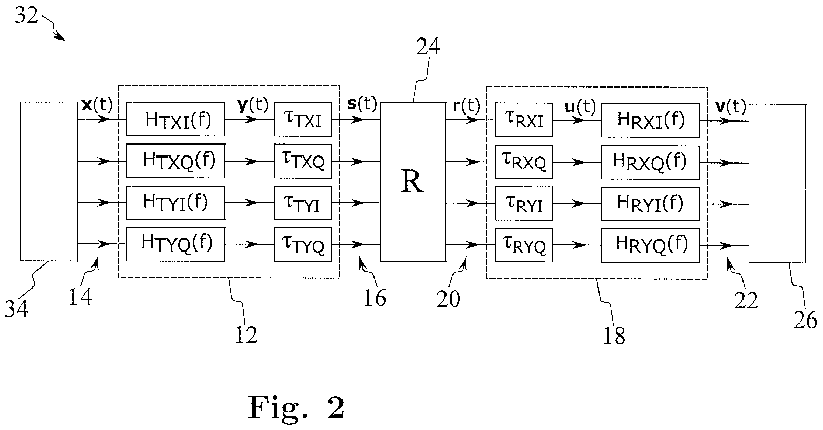

The functionality of the optical loopback path 24 will now be described in additional detail with reference to Fig. 2, which shows an equivalent circuit diagram 32 of the system 10 for determining skew.

Mathematically, the operation of the optical loopback path 24 and the resulting coupling of the first plurality of signal components of the optical output signal with the second plurality of signal components of the optical input signal may be described in terms of a rotation matrix:

$$\begin{pmatrix} r_{xi} + jr_{xq} \\ r_{yi} + jr_{yq} \end{pmatrix} = \begin{pmatrix} e^{-j\theta} & 0 \\ 0 & e^{j\theta} \end{pmatrix} \begin{pmatrix} \cos\varphi & -\sin\varphi \\ \sin\varphi & \cos\varphi \end{pmatrix} \begin{pmatrix} e^{-j\psi} & 0 \\ 0 & e^{j\psi} \end{pmatrix} \begin{pmatrix} s_{xi} + js_{xq} \\ s_{yi} + js_{yq} \end{pmatrix}$$

$$= \begin{pmatrix} \cos\varphi\, e^{-j(\theta+\psi)} & -\sin\varphi\, e^{-j(\theta-\psi)} \\ \sin\varphi\, e^{j(\theta-\psi)} & \cos\varphi\, e^{j(\theta+\psi)} \end{pmatrix} \begin{pmatrix} s_{xi} + js_{xq} \\ s_{yi} + js_{yq} \end{pmatrix} \tag{1}$$

In Eq. (1), $r_{xi}$ and $r_{yi}$ denote the respective in-phase components of the optical input signal for two orthogonal polarization directions $x$, $y$. Similarly, $r_{xq}$ and $r_{yq}$ denote the respective quadrature components for the $x$ and $y$ polarizations of the optical input signal. The corresponding components of the optical output signal are denoted by $s_{xi}$, $s_{yi}$ and $s_{xq}$, $s_{yq}$, respectively. In Eq. (1), j denotes the imaginary unit, and $\theta$, $\varphi$ and $\varphi$ are rotation angles. An immaterial common phase offset has been neglected in Eq. (1).

Using real instead of complex quantities, Eq. (1) can be equivalently rewritten as

$$\begin{pmatrix} r_{xi} \\ r_{xq} \\ r_{yi} \\ r_{yq} \end{pmatrix} = R \begin{pmatrix} s_{xi} \\ s_{xq} \\ s_{yi} \\ s_{yq} \end{pmatrix} \tag{2}$$

with the rotation matrix

$$R =$$
$$\begin{pmatrix} \cos\theta & \sin\theta & 0 & 0 \\ -\sin\theta & \cos\theta & 0 & 0 \\ 0 & 0 & \cos\theta & -\sin\theta \\ 0 & 0 & \sin\theta & \cos\theta \end{pmatrix} \begin{pmatrix} \cos\varphi & 0 & -\sin\varphi & 0 \\ 0 & \cos\varphi & 0 & -\sin\varphi \\ \sin\varphi & 0 & \cos\varphi & 0 \\ 0 & \sin\varphi & 0 & \cos\varphi \end{pmatrix} \begin{pmatrix} \cos\psi & \sin\psi & 0 & 0 \\ -\sin\psi & \cos\psi & 0 & 0 \\ 0 & 0 & \cos\psi & -\sin\psi \\ 0 & 0 & \sin\psi & \cos\psi \end{pmatrix}$$
$$(3)$$

The circuit diagram of Fig. 2 shows the transmission of the respective four signal components through the system 10 and via the optical loopback path 24. A digital signal processing unit 34 provides the electric input signals $x(t)$ and feeds them via the electric input path 14 to the optical transmitter unit 12. The optical transmitter unit 12 converts the electric input signal $\boldsymbol{x}(t)$ component-wise into corresponding dual-polarization optical signals characterized by four orthogonal components of the vector $\boldsymbol{y}(t)$. The respective transmitter functions are denoted by $H_{TXI}$, $H_{TXQ}$, $H_{TYI}$, and $H_{TYQ}$ in Fig. 2, and may also capture the transmitter low-pass filtering effects. The transmitter skew imposed by the optical transmitter unit 12 is represented in terms of transmitter skew functions $\tau_{TXI}$, $\tau_{TXQ}$, $\tau_{TYI}$, and $\tau_{TYQ}$. The resulting optical output signal represented by the four-component vector $s(t)$ is fed into the optical output path 16. The optical output signal $s(t)$ is now subjected to polarization mixing in terms of the rotation matrix $R$ in the optical loopback path 24, and the resulting optical signal represented by the four-component vector $r(t)$ is received via the optical input path 20 at the optical receiver unit 18.

As further illustrated in Fig. 2, the receiver skew associated with the optical receiver unit 18 may be represented in terms of corresponding skew functions $\tau_{RXI}$, $\tau_{RXQ}$, $\tau_{RYI}$, and $\tau_{RYI}$ and results in signals $u(t)$ that may subsequently be subjected to the receiver transfer functions $H_{RXI}$, $H_{RXQ}$, $H_{RYI}$, and $H_{RYQ}$ to result in the respective electric output signals of the four-component vector $v(t)$ that may be fed into the electric output paths 22 and analyzed in the analysis unit 26.

The different skew functions and transfer functions are identified by a sequence of three indices, wherein the first index indicates if the respective function relates to the transmitter (index T) or to the receiver (index R). The second index refers to the involved polarization (X or Y) and the third index specifies whether the function relates to the in-phase component (index I) or the quadrature component (index Q).

From Eq. (2) and Eq. (3) we may infer that the separation of the delays $\tau_{Txx}$ (the x denotes that reference is made to any polarization and any component) at the transmitter side and delays $\tau_{Rxx}$ at the receiver side becomes possible in case the polarization mixing matrix R is not the identity matrix, and is not a column or row permutation of the identity matrix. If this condition is fulfilled, proper polarization mixing occurs. The mixing angles $\theta$, $\varphi$ and $\psi$ of the polarization mixing matrix R may be chosen accordingly.

In some examples, the polarization mixing may also implement time-varying polarization rotation angles $\theta$, $\varphi$ and $\psi$. As long as the polarization rotation is slow compared to the symbol rate, this does not affect the accuracy of the system and method according to the embodiment. On the contrary, a polarization rotation may even be beneficial in order to increase the diversity of the setup.

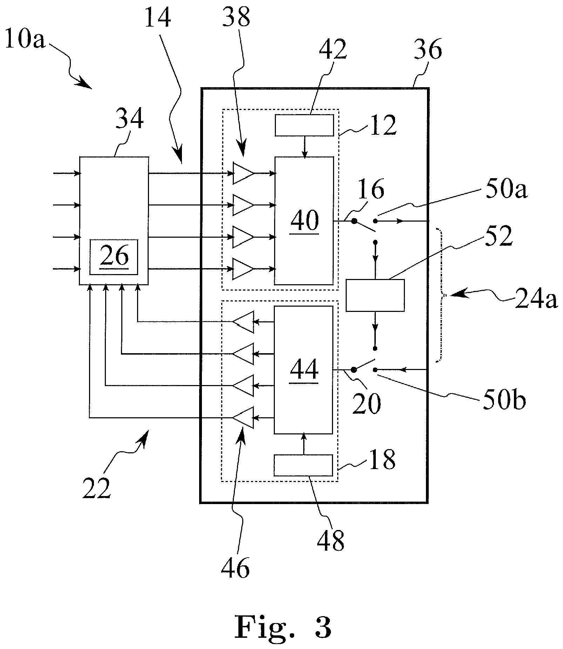

In some examples, the analysis unit 26 may be incorporated into the digital signal processing unit 34. A corresponding example of a system 10a for determining skew is illustrated schematically in Fig. 3.

The system 10a is generally similar to the system 10 described above with reference to Figs. 1 and 2, and corresponding components share the same reference signs. However, in the system 10a of Fig. 3 the optical transmitter unit 12 and the optical receiver unit 18 are combined and incorporated into a common optical transmitter/receiver assembly or optical transceiver 36. For instance, the optical transmitter/receiver assembly 36 can be implemented as an integrated optical card or module.

As can be further taken from Fig. 3, the optical transmitter unit 12 comprises a plurality of transmitter amplifiers 38 that amplify the incoming electrical signal components $x(t)$ in the electrical input path 14 and provide them to an optical modulator 40 that is supplied by means of a transmitter laser 42.

The optical receiver unit 18 comprises a demodulator 44 and a plurality of receiver amplifiers 46 that convert the optical input signal $r(t)$ provided via the optical input path 20 into the electrical output signal $v(t)$ provided via the electrical output path 22 to the digital signal processing unit 34 that comprises the analysis unit 26. The optical receiver unit 18 comprises a receiver laser 48 that is different from the transmitter laser 42. However, in other examples the optical transmitter unit 12 and the optical receiver unit 18 may share a common laser unit, emitting a laser signal that is split into two parts that are directed to the optical transmitter unit 12 and the optical receiver unit 18, respectively.

As can be further taken from Fig. 3, the optical loopback path 24a of the system 10a comprises optical switches 50a, 50b adapted to selectively couple the optical loopback path 24a to the optical output path 16 and optical input path 20, respectively. The optical loopback path 24a further comprises a coupling unit 52 adapted to couple the first plurality of signal components of the optical output signal $s(t)$ provided via the optical output path 16 at least partly with the second plurality of signal components of the optical input signal $r(t)$ provided via the optical input path 20, in particular with predetermined respective coupling constants between the respective first plurality of signal components and second plurality of signal components, as described above with reference to Equations (2) and (3).

When the system 10a is powered on or when an optical module is plugged in, the optical switches 50a, 50b may be closed to direct the transmitter output signal $s(t)$ from the optical output path 16 via the coupling unit 52 and the optical input path 20 to the optical receiver unit 18. The effect of the polarization mixing in the coupling unit 52 may be that the signal received in each one of the second plurality of signal components is a linear combination of some or all of the first plurality of signal components. Thus, a delay in one signal component at the optical transmitter unit 12 may generally affect all signal components at the optical receiver unit 18. For that reason, skew contributions originating from the optical transmitter unit 12 may be separated from skew contributions originating from the optical receiver unit 18, as will be explained in more detail below. The analysis unit 26 may determine these skew contributions, and may employ them for corrective digital pre-distortion in the digital signal processing unit 34.

The analysis unit 26 is not limited to determining skew contributions, but may also be adapted to determine additional imperfections or distortions associated with the optical transmitter unit 12 and/or optical receiver unit 18, and employ them for signal correction.

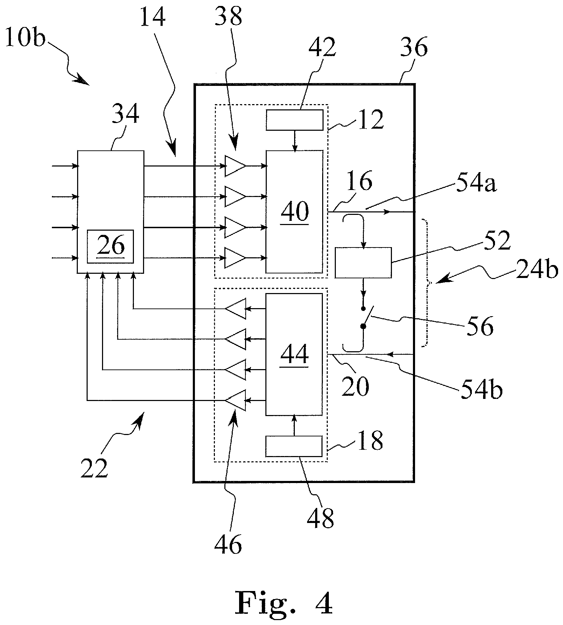

Fig. 4 is a schematic illustration of a system 10b for determining skew that generally corresponds to the system 10a described above with reference to Fig. 3, and corresponding components share the same reference signs.

The only difference is in the optical loopback path 24b. Rather than optical switches 50a, 50b as described above with reference to Fig. 3, the optical loopback path 24b of Fig. 4 comprises coupler units or tapping units 54a, 54b adapted to permanently couple the optical loopback path 24b to the optical output path 16 and optical input path 20, respectively. For instance, the tapping units 54a, 54b may comprise interferometers, such as Mach-Zehnder interferometers. One of the tapping units, such as the tapping unit 24b, may be connected to the coupling unit 52 via an optical switch 56, which allows to selectively activate or deactivate the optical feedback through the optical loopback path 24b.

The tapping units 54a, 54b may continuously tap small portions of the signals transmitted via the optical output path 16 and optical input path 20, respectively. During a test or calibration mode, the optical switch 56 may be closed to feed the transmitter signal s(t) from the optical transmitter unit 12 via the optical loopback path 24b directly back to the optical receiver unit 18, just as described above with reference to Figs. 1 to 3. After testing or calibration, the optical switch 56 may be returned to its original open position such that the optical signal received via the optical input path 20 is routed to the optical receiver unit 18 without distortion from the optical output signal emitted by the optical transmitter unit 12.

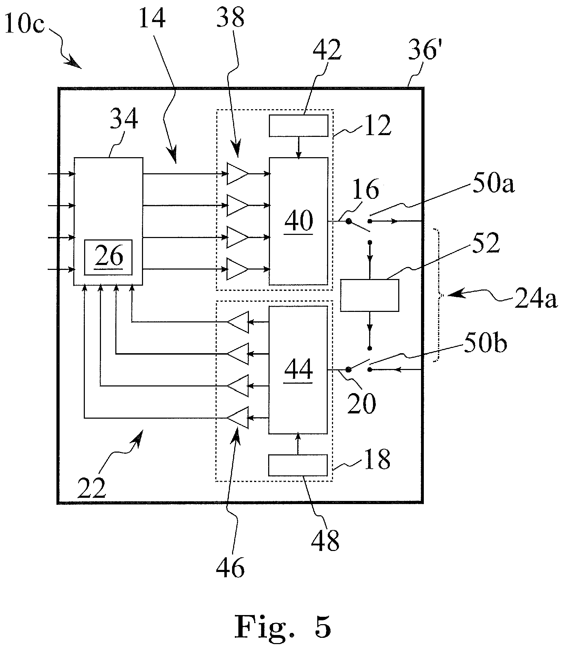

Fig. 5 is an illustration of a system 10c for determining skew that generally corresponds to the system 10a described above with reference to Fig. 3. However, in contrast to the configuration of Fig. 3, the system 10c of Fig. 5 comprises an optical transmitter/receiver assembly 36' that not only comprises the optical transmitter unit 12 and optical receiver unit 18, but also the digital signal processing unit 34 in one integrated unit. For instance, the optical transmitter/receiver assembly 36' may be implemented as an optical transceiver card that fully integrates the system 10c for determining skew, and hence allows for a self-contained and easy-to-use system for determining and correcting skew.

Fig. 5 shows a configuration of an optical loopback path 24a employing optical switches 50a, 50b. However, this is merely an example, and the variant of Fig. 4 with an optical loopback path 24b that comprises tapping units 54a, 54b in combination with an optical switch 56 may likewise be employed in a fully integrated optical transmitter/receiver assembly.

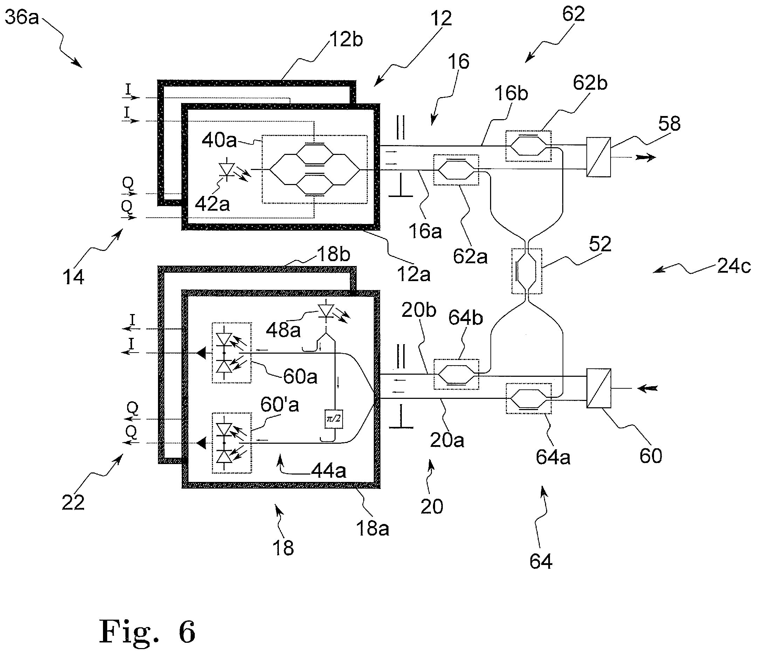

Fig. 6 is a more detailed schematic view of an optical transmitter/receiver assembly 36a that may be employed in a system 10, or 10a to 10c.

As can be taken from Fig. 6, the optical transmitter unit 12 may comprise two optical transmitter sub-units 12a, 12b, one for each polarization direction (horizontal or vertical polarization, as indicated by the symbols). The optical transmitter sub-unit 12a comprises an optical modulator 40a driven by a transmitter laser 42a. For instance, the optical modulator 40a may comprise an interferometer, such as a Mach-Zehnder interferometer. The optical transmitter sub-unit 12b has a corresponding composition and setup, and hence is not shown in detail in Fig. 6.

As can be further taken from Fig. 6, the optical output path 16 comprises two optical output sub-paths 16a, 16b corresponding to the respective optical transmitter sub-units 12a, 12b. Close to the output of the optical transmitter/receiver assembly 36a, the signal components having orthogonal polarizations are combined by means of a polarization beam combiner (PBC) 58.

As can be further taken from Fig. 6, the optical receiver unit 18 likewise comprises two optical receiver subunits 18a, 18b pertaining to the two orthogonal polarization directions (horizontal or vertical polarization, as indicated by the symbols). Only the optical receiver sub-unit 18a is described here in detail, given that the optical receiver sub-unit 18b has an identical setup and functionality.

As demonstrated in Fig. 6, each of the optical receiver sub-units 18a, 18b is adapted to receive incoming optical signals from corresponding optical input sub-paths 20a, 20b of the optical input path 20 corresponding to the two orthogonal polarization directions. A polarization beam splitter 60 splits the incoming optical signal into signals on the optical input sub-paths 20a, 20b.

The optical demodulator 44a of the optical receiver sub-unit 18a splits up the incoming optical signal from the optical input sub-path 20a into respective in-phase and quadrature components by means of a receiver laser 48a and selective phase shifting. The respective in-phase and quadrature components are detected by means of optical detector units 60a, 60'a that convert them into electrical in-phase and quadrature output signals in the electrical output path 22.

The optical loopback path 24c of the optical transmitter/receiver assembly 36a comprises a coupling unit 52 that may implement a variable coupling between the first plurality of signal components and the second plurality of signal components by means of a variable Mach-Zehnder interferometer. The coupling unit 52 is connected to the optical output path 16 by means of a first optical coupler unit 62. As can be taken from Fig. 6, the first optical coupler unit 62 comprises two sub-units 62a, 62b that couple to the respective optical output sub-paths 16a, 16b, respectively. Each of the first optical coupler sub-units 62a, 62b may comprise an interferometer, such as a Mach-Zehnder interferometer with a variable coupling that may be implemented as an optical switch.

Similarly, the optical loopback path 24c comprises a second optical coupler unit 64 adapted to couple the optical loopback path 24c to the optical input path 20. As can be taken from Fig. 6, the second optical coupler unit comprises two sub-units 64a, 64b that couple to the respective optical input sub-paths 20a, 20b, respectively.

The configuration and functionality of the second optical coupler sub-units 64a, 64b may generally correspond to the first optical coupler sub-units 62a, 62b, respectively. In particular, each of the second optical coupler sub-units 64a, 64b may comprise a Mach-Zehnder interferometer adapted to implement a variable coupling, and to be employed as a switch for selectively coupling the coupling unit 52 to the respective optical input sub-paths 20a, 20b.

In an example, the coupling unit 52 induces a rotation of 45°, and the polarization beam splitters 58 and 60 have a splitting ratio of 50%. In this way, all the signal components among the first plurality of signal components and the second plurality of signal components may contribute equally to the components detected by means of the optical receiver unit 18.

However, an estimate of the different skew contributions can also be achieved with different rotation angles and different coupling ratios. When using a tunable splitter for coupling the first plurality of signal components with the second plurality of signal components, determination of the skew components can be performed several times for different coupling ratios in order to improve the accuracy.

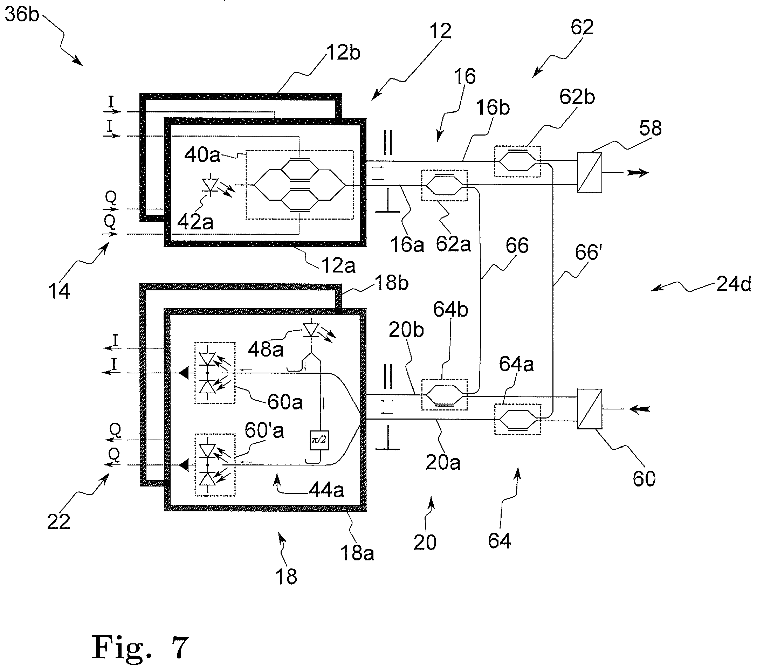

Fig. 7 shows an optical transmitter/receiver assembly 36b that generally corresponds to the optical transmitter/receiver assembly 36a described above with reference to Fig. 6, and corresponding components and elements share the same reference signs.

However, in the optical loopback path 24d of the optical transmitter/receiver assembly 36b, the two transmitter output polarizations provided via the two optical output sub-paths 16a, 16b are not mixed. Similarly, the input polarizations received via the optical input sub-paths 20a, 20b are not mixed. Rather, the optical loopback path 24d is adapted to mix the vertical transmitter polarization component provided in the optical output sub-path 16a via a first mixing line 66 with the horizontal polarization receiver component in the optical input sub-path 20b. Correspondingly, the optical loopback path 24d comprises a second mixing line 66' adapted to mix the horizontal transmitter polarization component provided in the optical output sub-path 16b with the vertical polarization receiver input component in the optical input sub-path 20a. But it would also be possible to mix the vertical transmitter components with the vertical receiver components, and to mix the horizontal transmitter components with the horizontal receiver components.

As can be taken from Fig. 7, the first mixing line 66 directly connects the first optical coupler sub-unit 62a pertaining to the first optical output sub-path 16a with the second optical coupler sub-unit 64b pertaining to the second optical input sub-path 20b. Correspondingly, the second mixing line 66' directly connects the first optical coupler sub-unit 62b pertaining to the second optical output sub-path 60b to the second optical coupler sub-unit 64a pertaining to the first optical input sub-path 20a.

In the optical transmitter/receiver assembly 36b, the receiver lasers 48, 48a may be implemented as free-running local oscillators, such that typically each balanced receiver detects a mixture of the in-phase and the quadrature components. These components may be separated at a later stage by means of digital signal processing.

Preferably, the phase of the local oscillator does not correspond to the phase of one of the in-phase or the quadrature components. In fact, this is a typical case, and hence both optical receiver sub-units 18a, 18b comprise balanced receivers that provide electrical signals comprising contributions from both in-phase and quadrature signal components. In the rare case that the phases are perfectly aligned, it may be sufficient to wait for some time to allow the phases of the lasers, which are usually not perfectly stable, to misalign. Alternatively, the receiver lasers 48, 48a may be turned off and turned on again.

Techniques will now be described for determining the transmitter skew and the receiver skew from the received coupled optical signal. Mathematically, for the assembly 36b illustrated in Fig. 7 the two electrical output signals can be described by

$$R_I = \cos \Delta\alpha \cdot S_I + \sin \Delta\alpha \cdot S_Q \qquad (4)$$

and

$$R_Q = -\sin \Delta\alpha \cdot S_I + \cos \Delta\alpha \cdot S_Q, \qquad (5)$$

where $S_I$ and $S_Q$ denote the in-phase and quadrature components of the transmit signal generated by one of the transmitter sub-units 12a and 12b, and $R_I$ and $R_Q$ represent the output signals from one of the balanced receivers 18a, 18b. The parameter $\Delta\alpha$ denotes the phase difference between the phase of the local oscillator 48a and the in-phase components at the upper balanced receiver.

In the following part of the description, the second index of the skew and transfer functions is of no relevance since only one in-phase component will be considered per transmitter and receiver. The same applies to the quadrature component. In consequence, the second index is not necessary for unambiguously identifying the component and will thus be slapped, for the ease of presentation.

Both contributions to $R_1$ according to Eq. (4) suffer from the same delay $\tau_{RI}$ at the receiver unit 18a, 18b, whereas the first contribution stemming from the in-phase modulator experiences the delay $\tau_{TI}$ and the contribution from the quadrature modulator experiences the delay $\tau_{TQ}$. Since all single components experience the same delay when being looped back, this delay is not considered in the following. In summary, the contribution $\cos \Delta_\varphi \cdot S_I$ experiences the delay $x_{TI} + \tau_{RI}$ and the contribution $\sin \Delta\varphi \cdot S_Q$ experiences the delay $\tau_{TQ} + \tau_{RI}$. Similar considerations apply to the signal $R_Q$ of Eq. (5). We hence get the following delays:

| Signal | Contribution | Delay |
|--------|--------------|-------|
| $R_I$ | $C_{II} = \cos \Delta\varphi \cdot S_I$ | $\tau_{II} = \tau_{TI} + \tau_{RI}$ |
| | $C_{QI} = \sin\Delta\varphi \cdot S_Q S_Q$ | $\tau_{QI} = \tau_{TQ} + \tau_{RI}$ |
| $R_Q$ | $C_{IQ} = -\sin \Delta\varphi \cdot S_I$ | $\tau_{IQ} = \tau_{TI} + \tau_{RQ}$ |
| | $C_{QQ} = \cos \Delta\varphi \cdot S_Q$ | $\tau_{QQ} = \tau_{TQ} + \tau_{RQ}$ |

From the measured delays, the transmitter skew $\Delta\tau_T = \tau_{T1} - \tau_{TQ}$ and the receiver skew $\Delta\tau_R = \tau_{RI} - \tau_{RQ}$ can be determined by means of the following equations:

$$\Delta\tau_T = \tau_{TI} - \tau_{TQ} = \tau_{II} - \tau_{QI} = \tau_{IQ} - \tau_{QQ} \qquad (6)$$

and

$$\Delta\tau_R = \tau_{RI} - \tau_{RQ} = \tau_{II} - \tau_{IQ} = \tau_{QI} - \tau_{QQ} \qquad (7)$$

It remains to measure the delay for the two contributions of each signal separately. For this purpose, different techniques can be employed, as will now be described.

In an embodiment, the in-phase component and the quadrature component may be modulated with signals $S_I(t)$ and $S_Q(t)$ that are uncorrelated. In other words, their cross correlation function vanishes, i.e. $S_I(t) * S_Q(t) = 0$. Under this condition, the delay $\tau_{II}$ can be determined by correlating the signal $R_I$ with the signal $S_I(t)$. More precisely, the correlation function $R_I(t) * S_I(t) = S_I(t - \tau_{II}) * S_I(t)$ becomes maximum at $\tau_{II}$.

Similarly, the signal $R_I(t)$ can be correlated with the signal $S_Q(t)$ in order to determine the delay $\tau_{QI}$. Furthermore, similar operation can be performed with the signal $R_Q(t)$ for determining the two missing delays.

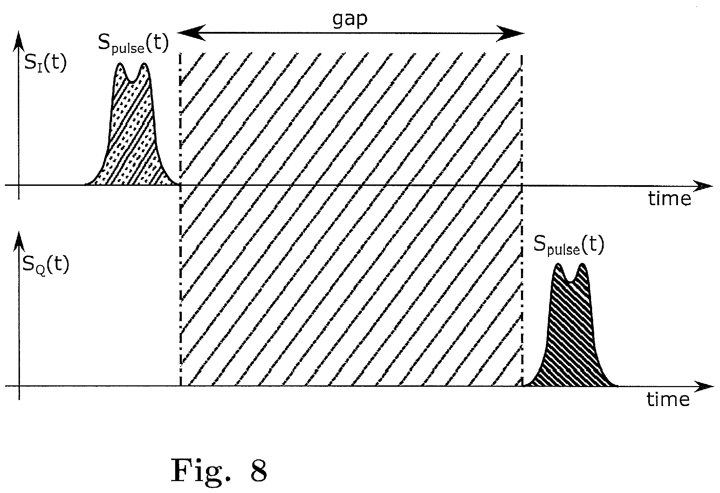

Signal waveforms used in accordance with another embodiment are shown in Fig. 8. Both signal components may be modulated with the same signal $S_{pulse}(t)$. In the example, this signal is a time-varying pulse having the shape illustrated in Fig. 8, but in general any pulse shape assuming non-zero values during a limited period of time only can be used. This pulse shape is applied to one of the signal components with a delay or gap, such that the signal components are modulated by pulses that are separated by a time gap that is larger than the sum of the magnitudes of the maximum reasonably expected skews for transmitter and receiver.

Correlating the signals from the balanced receivers $R_I$ and $R_Q$ with the pulse shape $S_{pulse}(t)$ yields two peaks for each correlation function. These peaks can be assigned unambiguously to the different contributions such that the required delays can be determined.

In summary, a technique allowing determining the transmitter and receiver skew with only one single loopback configuration and comprising the optical terminals has been described.

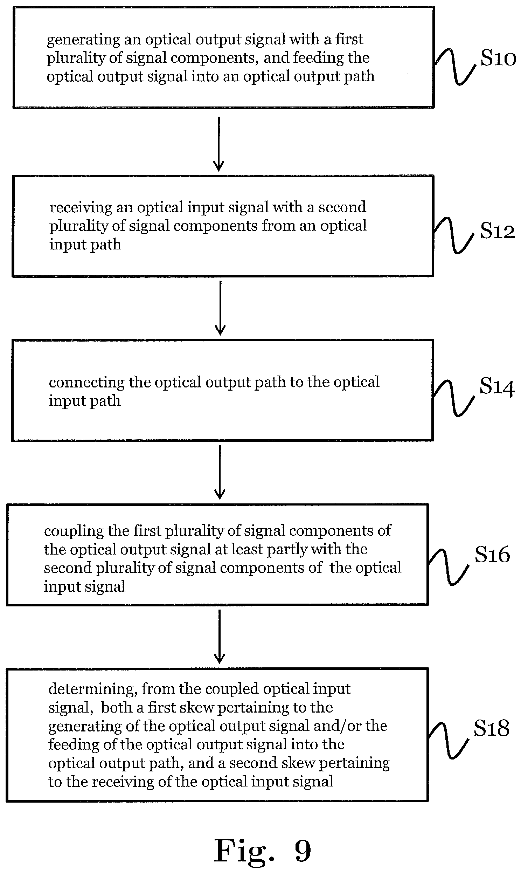

An example of a method for determining skew is illustrated in the flow diagram of Fig. 9.

In a first step S10, an optical output signal is generated, wherein the optical output signal has a first plurality of signal components, and the optical output signal is fed into an optical output path.

In a second step S12, an optical input signal is received from an optical input path, the optical input signal having a second plurality of signal components.

In a third step S14, the optical output path is connected to the optical input path.

In a fourth step S16, the first plurality of signal components of the optical output signal is coupled or mixed at least partly with the second plurality of signal components of the optical input signal.

In a fifth step S18, both a first skew pertaining to the generating of the optical output signal and/or the feeding of the optical output signal into the optical output path, and a second skew pertaining to the receiving of the optical input signal, are determined from or based on the received coupled optical input signal.

Although Fig. 9 shows the steps S10 to S18 in a given order, it will be appreciated that the disclosure is not so limited, and the method may also comprise the steps in a different order.

The techniques according to the present disclosure allow to transmit and receive optical data signals with an integrated loopback from the transmitter to the receiver, and to reliably estimate the skew between the various signal components. In particular the techniques according to the present disclosure allow to separate the skew contributions from the transmitter and receiver. This minimizes the effort for calibration and setup, and dispenses with relying on third party measurement results.

The examples and the Figures merely serve to illustrate the invention and the beneficial effects associated therewith, but should not be understood to imply any limitation. The scope is to be determined from the appended claims.

Reference Signs

| 10 | system for determining skew |
|---|---|
| 10a - 10c | system for determining skew |
| 12 | optical transmitter unit |
| 12a, 12b | optical transmitter sub-units |
| 14 | electric input path |
| 16 | optical output path |
| 16a, 16b | optical output sub-paths |
| 18 | optical receiver unit |
| 18a, 18b | optical receiver sub-units |

| 20 | optical input path |
|---|---|
| 20a, 20b | optical input sub-paths |
| 22 | electric output path |
| 24 | optical loopback path |
| 24a - 24d | optical loopback paths |
| 26 | analysis unit |
| 28 | transmitter unit control path |
| 30 | receiver unit control path |
| 32 | circuit diagram |
| 34 | digital signal processing unit |
| 36, 36' | optical transmitter/receiver assembly |
| 36a, 36b | optical transmitter/receiver assembly |
| 38 | transmitter amplifiers of optical transmitter unit 12 |
| 40 | optical modulator of optical transmitter unit 12 |
| 40a | optical modulator of optical transmitter sub-unit 12a |
| 42 | transmitter laser of optical transmitter unit 12 |
| 42a | transmitter laser of optical transmitter sub-unit 12a |
| 44 | demodulator of optical receiver unit 18 |
| 44a | demodulator of optical receiver sub-unit 18a |
| 46 | receiver amplifiers of optical receiver unit 18 |
| 48 | receiver laser of optical receiver unit 18 |
| 48a | receiver laser of optical receiver sub-unit 18a |
| 50a, 50b | optical switches |
| 52 | coupling unit |
| 54a, 54b | tapping units |
| 56 | optical switch |
| 58 | polarization beam combiner |
| 60 | polarization beam splitter |
| 60a, 60'a | optical detector units |
| 62 | first optical coupler unit |
| 62a, 62b | first optical coupler sub-units of first optical coupler unit 62 |
| 64 | second optical coupler unit |
| 64a, 64b | second optical coupler sub-units of second optical coupler unit 64 |
| 66, 66' | mixing lines |

**Claims**

1. A system (10, 10a-10c) for determining skew, comprising:

an optical transmitter unit (12; 12a, 12b) adapted to generate an optical output signal with a first plurality of signal components, and adapted to feed the optical output signal into an optical output path (16; 16a, 16b);
an optical receiver unit (18; 18a, 18b) adapted to receive an optical input signal with a second plurality of signal components from an optical input path (20; 20a, 20b); and
an optical loopback path (24, 24a-24d) adapted to connect the optical output path (16; 16a, 16b) to the optical input path (20; 20a, 20b);
wherein the optical loopback path (24, 24a-24d) is adapted to couple the first plurality of signal components of the optical output signal at least partly with the second plurality of signal components of the optical input signal; and
an analysis unit (26) adapted to determine, from the coupled optical input signal, both a first skew pertaining to the optical transmitter unit (12; 12a, 12b) and a second skew pertaining to the optical receiver unit (18; 18a, 18b).

2. The system (10, 10a-10c) according to claim 1, wherein the analysis unit (26) is adapted to determine a plurality of delay components that comprise a sum of delays of signal components among the first plurality of signal components and delays of signal components among the second plurality of signal components, wherein the analysis unit (26) is preferably further adapted to determine the first skew and the second skew from the plurality of delay components.

3. The system (10, 10a-10c) according to any of the preceding claims, wherein the analysis unit (26) is adapted to determine the first skew and the second skew with a fixed coupling of the first plurality of signal components with the second plurality of signal components.

4. The system (10, 10a-10c) according to any of the preceding claims, wherein the optical loopback path (24, 24a-24d) is adapted to couple a first signal component among the first plurality of signal components at least partly with a second signal component among the second plurality of signal components, the second signal component being different from the first signal component.

5. The system (10, 10a-10c) according to any of the preceding claims, wherein the optical loopback path (24, 24a-24d) is adapted to couple a first signal component among the first plurality of signal components at least partly with a second signal component among the first plurality of signal components, the second signal component being different from the first signal component.

6. The system (10, 10a-10c) according to any of the preceding claims, wherein the optical loopback path (24, 24a-24d) comprises a coupling unit (52) adapted to couple the first plurality of signal components of the optical output signal at least partly with the second plurality of signal components of the optical input signal, in particular with predetermined respective coupling constants between the respective first plurality of signal components and second plurality of signal components.

7. The system (10, 10a-10c) according to any of the preceding claims, wherein the system (10, 10a-10c) is adapted to selectively connect the optical loopback path (24, 24a-24d) to the optical output path (16; 16a, 16b) and/or to the optical input path (20; 20a, 20b).

8. The system (10, 10a-10c) according to any of the preceding claims, further comprising a first optical coupler (50a; 54a; 62, 62a, 62b) adapted to couple the optical loopback path (24, 24a-24d) to the optical output path (16; 16a, 16b), and/or a second optical coupler (50b; 54b; 64, 64a, 64b) adapted to couple the optical loopback path (24, 24a-24d) to the optical input path (20; 20a, 20b).

9. The system (10, 10a-10c) according to any of the preceding claims, wherein the optical transmitter unit (12; 12a, 12b) and the optical receiver unit (18; 18a, 18b) and the optical loopback path (24, 24a-24d) are integrated into a common integrated optical device (36; 36'; 36a; 36b), in particular integrated into an optical card and/or optical module.

10. A method for determining skew, comprising:

    generating an optical output signal with a first plurality of signal components, and feeding the optical output signal into an optical output path (16; 16a, 16b);
    receiving an optical input signal with a second plurality of signal components from an optical input path (20; 20a, 20b);
    connecting the optical output path (16; 16a, 16b) to the optical input path (20; 20a, 20b);
    coupling the first plurality of signal components of the optical output signal at least partly with the second plurality of signal components of the optical input signal; and
    determining, from the optical input signal coupled to the optical output signal, both a first skew pertaining to the generating of the optical output signal and/or the feeding of the optical output signal into the optical output path (16; 16a, 16b), and a second skew pertaining to the receiving of the optical input signal.

11. The method according to claim 10, further comprising:

    selectively connecting an optical loopback path (24, 24a-24d) to the optical output path (16; 16a, 16b) and/or the optical input path (20; 20a, 20b).

12. The method according to claim 10 or 11, wherein determining the first skew and the second skew comprises determining a plurality of delay components that comprise a sum of delays of signal components among the first plurality of signal components and delays of signal components among the second plurality of signal components, wherein the first skew and the second skew are preferably determined from the plurality of delay components.

13. The method according to any of the claims 10 to 12, wherein the first skew and the second skew are determined with a fixed coupling of the first plurality of signal components with the second plurality of signal components.

**14.** The method according to any of the claims 10 to 13, comprising:

adjusting the coupling of the first plurality of signal components with the second plurality of signal components, in particular varying the coupling over time.

**15.** A computer program comprising computer-readable instructions that are adapted to implement, when executed on a computing system, in particular a computing system communicatively connected to and adapted to control the system (10, 10a-10c) according to any of the claims 1 to 9, a method according to any of the claims 10 to 14.

Fig. 1

Fig. 2

EP 3 506 531 A1

Fig. 3

Fig. 4

Fig. 5

Fig. 6

Fig. 7

Fig. 8

EP 3 506 531 A1

generating an optical output signal with a first plurality of signal components, and feeding the optical output signal into an optical output path $\sim$ S10

receiving an optical input signal with a second plurality of signal components from an optical input path $\sim$ S12

connecting the optical output path to the optical input path $\sim$ S14

coupling the first plurality of signal components of the optical output signal at least partly with the second plurality of signal components of the optical input signal $\sim$ S16

determining, from the coupled optical input signal, both a first skew pertaining to the generating of the optical output signal and/or the feeding of the optical output signal into the optical output path, and a second skew pertaining to the receiving of the optical input signal $\sim$ S18

# Fig. 9

Europäisches
Patentamt

European
Patent Office

Office européen
des brevets

# EUROPEAN SEARCH REPORT

Application Number

EP 17 21 0789

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2016/164469 A1 (ARISTA NETWORKS INC [US]) 13 October 2016 (2016-10-13) * paragraphs [0003] - [0006], [0039] - [0050]; figures 5,6A,6B,7A,7B * | 1-15 | INV. H04B10/2507 H04B10/40 H04B10/50 H04B10/60 |
| A | EP 2 905 913 A2 (AURRION INC [US]) 12 August 2015 (2015-08-12) * paragraphs [0003], [0413] - [0020], [0027] - [0030], [0039]; figures 2A,2B,3C * | 1-15 | |
| A | GB 2 433 663 A (FINISAR CORP [US]) 27 June 2007 (2007-06-27) * page 1, line 6 - page 4, line 17 * * page 6, line 9 - page 9, line 5; figure 2 * | 1-15 | |
| A | FLUDGER C R S ET AL: "Low cost transmitter self-calibration of time delay and frequency response for high baud-rate QAM transceivers", 2017 OPTICAL FIBER COMMUNICATIONS CONFERENCE AND EXHIBITION (OFC), OSA, 19 March 2017 (2017-03-19), pages 1-3, XP033100907, [retrieved on 2017-05-31] * 1. Introduction 5. Conclusions; figure 1 * | 1-15 | **TECHNICAL FIELDS SEARCHED (IPC)** H04B |
| A | US 2012/263456 A1 (TANAKA TOSHIKI [JP] ET AL) 18 October 2012 (2012-10-18) * paragraphs [0045] - [0059], [6670]; figures 2,5A,5B * | 1-15 | |

The present search report has been drawn up for all claims

| Place of search | Date of completion of the search | Examiner |
|---|---|---|
| Munich | 19 June 2018 | De Vries, Jane |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 17 21 0789

This annex lists the patent family members relating to the patent documents cited in the above-mentioned European search report.
The members are as contained in the European Patent Office EDP file on
The European Patent Office is in no way liable for these particulars which are merely given for the purpose of information.

19-06-2018

| Patent document cited in search report | | Publication date | Patent family member(s) | | Publication date |
|---|---|---|---|---|---|
| WO 2016164469 | A1 | 13-10-2016 | EP | 3281312 A1 | 14-02-2018 |
| | | | TW | 201702787 A | 16-01-2017 |
| | | | US | 2016301520 A1 | 13-10-2016 |
| | | | US | 2018138985 A1 | 17-05-2018 |
| | | | WO | 2016164469 A1 | 13-10-2016 |
| EP 2905913 | A2 | 12-08-2015 | EP | 2905913 A2 | 12-08-2015 |
| | | | EP | 3264635 A1 | 03-01-2018 |
| | | | US | 2015222968 A1 | 06-08-2015 |
| | | | US | 2017366880 A1 | 21-12-2017 |
| GB 2433663 | A | 27-06-2007 | NONE | | |
| US 2012263456 | A1 | 18-10-2012 | JP | 5786427 B2 | 30-09-2015 |
| | | | JP | 2012222733 A | 12-11-2012 |
| | | | US | 2012263456 A1 | 18-10-2012 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20160301520 A1

- US 8855498 B2

**Non-patent literature cited in the description**

- **A. NAPOLI et al.** Novel DAC Digital Pre-Emphasis Algorithm for Next-Generation Flexible Optical Transponders. *the Proceedings of the 2015 Optical Fiber Communication Conference (OFC 2015),* 22 March 2015

- **C.R. FLUDGER.** Low-Cost Transmitter Self-Calibration of Time Delay and Frequency Response for High Band-Rate QAM transceivers. *Proceedings of the 2017 Optical Fiber Communication Conference (OFC 2017),* 19 March 2017
- **G. KHANNA et al.** A Robust Adaptive Pre-Distortion Method for Optical Communication Transmitters. *IEEE Photonics Technology Letters,* April 2016, vol. 28 (7), 752-755